# EUROPEAN PATENT APPLICATION

(11) **EP 4 804 474 A1**
(43) Date of publication of application: **09.09.2026**
(21) Application number: 26161619.7
(22) Date of filing: 02.03.2026
(51) Int. Cl.: H04L 41/0816, H04L 41/0631, H04L 41/08, H04L 41/16, H04L 43/024, H04L 43/028, H04L 43/12

(54) **MACHINE LEARNING ANALYTICS FOR EDGE DEVICES WITH MULTI-LAYER DATA EXTRACTION**

(30) Priority: 03.03.2025 US 202519068976
(71) Applicant: Avago Technologies International Sales Pte. Limited, Singapore 768923 (SG)
(72) Inventor: Li, Gordon Yong, San Diego, CA 92127 (US); Chen, Xuemin, San Diego, CA 92127 (US)
(74) Representative: Grünecker Patent- und Rechtsanwälte PartG mbB

(57) **Abstract**

An electronic device is configured to filter sample data on the electronic device from data sources according to a sample filter configuration, where the data sources operate at respective functional layers, and to generate feature data from the sample data according to a feature generator configuration. The generated feature data is aggregated into queues in input formats corresponding to machine learning models activated according to a context switch policy, and inference operations are executed by providing feature data from the queues as input data to the machine learning models to generate output data. The status of the electronic device may be determined based on the generated output data, and the sample filter configuration, the feature generator configuration, or the context switch policy may be adapted based on the determined status of the electronic device to modify subsequent iterations of the filtering, generating, aggregating, or executing operations.

## Description

### TECHNICAL FIELD

The present description relates in general to broadband communications networks including, for example, edge devices operating within broadband communications networks.

### BACKGROUND

Service providers may use broadband communications networks to deliver services such as Internet access, video content, telephony, gaming, etc. to subscribing users. Subscribing users access broadband communications networks and the services provided thereon with edge devices like cable modems (CMs), set-top boxes (STBs), and passive optical network (PON) units. The functionality and performance of the edge devices significantly impact a user's experience using the services provided by the broadband communications network. Analytics applied to the operations of edge devices can yield valuable information regarding both the edge devices and the broadband communications network.

### BRIEF DESCRIPTION OF THE DRAWINGS

Certain features of the subject technology are set forth in the appended claims. However, for purposes of explanation, several aspects of the subject technology are set forth in the following figures.
FIG. 1 illustrates an example of a network environment in which aspects of the subject technology may be implemented.
FIG. 2 is a block diagram illustrating components of an edge device according to aspects of the subject technology.
FIG. 3 is a block diagram illustrating system components of an edge device according to aspects of the subject technology.
FIG. 4 is a block diagram illustrating components of an ML input hub according to aspects of the subject technology.
FIG. 5 is a flowchart illustrating an example process of machine learning analytics for edge devices according to aspects of the subject technology.
FIG. 6 is a block diagram illustrating an example workflow with respect to components of an edge device according to aspects of the subject technology.
FIG. 7 is a block diagram illustrating aspects of multi-layer edge diagnostic operations that may be executed in a cable modem according to aspects of the subject technology.

### DETAILED DESCRIPTION

The detailed description set forth below is intended as a description of various configurations of the subject technology and is not intended to represent the only configurations in which the subject technology may be practiced. The appended drawings are incorporated herein and constitute part of the detailed description. The detailed description includes specific details for providing a thorough understanding of the subject technology. However, the subject technology is not limited to the specific details set forth herein and may be practiced without one or more of the specific details. In some instances, structures and components are shown in a block-diagram form to avoid obscuring the concepts of the subject technology.

Edge devices such as cable modems (CMs), set-top boxes (STBs), and passive optical network (PON) units are being designed with increasing levels of processing power and functionality. For example, edge devices may include machine learning processing engines that provide hardware acceleration for machine learning operations. In this manner, machine learning (ML) models can be used to perform edge analytics on the edge devices rather than consuming resources and network bandwidth sending data to another device or system to perform the edge analytics. Edge analytics may detect and analyze anomalies in the operations of the edge device to identify potential issues from the perspective of the edge device. Issues may include network intrusions, communications channel impairment, abnormal usage patterns, latency changes, predicted power consumption and thermal issues, memory availability, etc.

Edge devices also may use a system-on-chip (SoC) design for many of the electronic components included in the edge devices. The electronic components may include, but are not limited to, one or more processors (e.g., central processing unit (CPU), graphics processing unit (GPU), neural processing unit (NPU), etc.), memory (e.g., dynamic random-access memory (DRAM), static random-access memory (SRAM), flash memory, etc.), input/output (I/O) interfaces, network interfaces, and secondary memory interfaces. The electronic components are incorporated into a single integrated circuit (IC) which may reduce power consumption, decrease the size of the system, and improve the speed of data operations compared to systems that implement the electronic components on different respective ICs.

Edge device SoCs provide a rich array of data features across multiple functional layers that can be used for ML-based edge analytics. Functional layers are abstractions that provide respective classes of functionality with methods/protocols for communicating with other functional layers. Examples of functional layers include network layers such as the layers of the Open System Interconnection (OSI) model for network communications, and platform layers for the functionality associated with different hardware and software elements of a system. Operations associated with different functional layers generate data within an SoC. The subject technology proposes systematically extracting data across multiple functional layers and generating feature data for ML models used for edge analytics. ML models across multiple functional layers are dynamically configured and queued for execution via a context-switching process that adapts to the analytic status of the system. These and other features of the subject technology are described in more detail below.

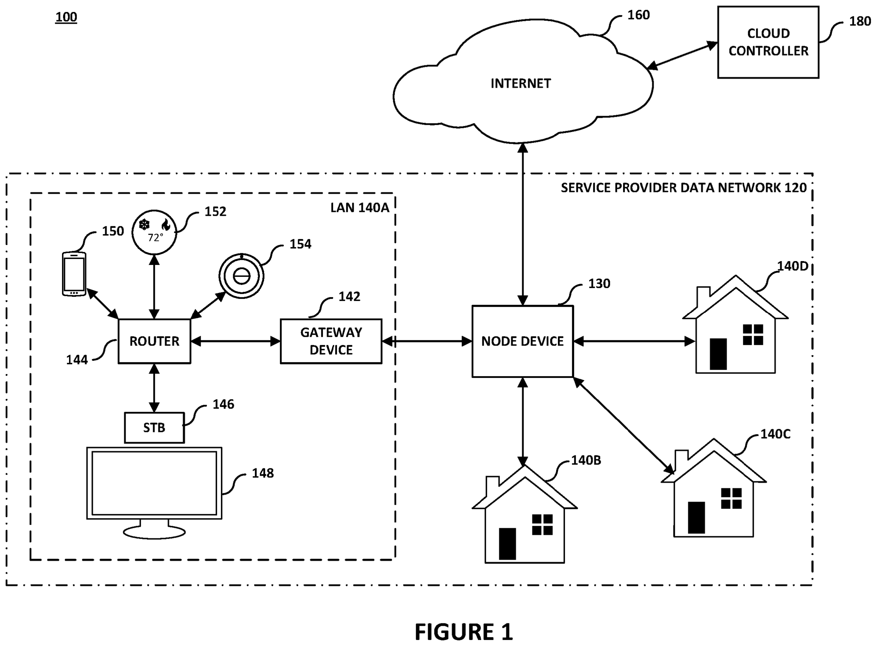

FIG. 1 illustrates an example of a network environment 100 in which aspects of the subject technology may be implemented. Not all of the depicted components may be required, however, and one or more implementations may include additional components not shown in the figure. Variations in the arrangement and type of the components may be made without departing from the spirit or scope of the claims as set forth herein. Depicted or described connections and couplings between components (including electrical and communicative connections and couplings) are not limited to direct connections or direct couplings and may be implemented with one or more intervening components unless expressly stated otherwise.

The example network environment 100 includes service provider data network 120 configured to provide services (e.g., video content, data, telephony, gaming, etc.) to local area networks (LANs) 140A-140D operating at respective customer premises. The services may be internal to service provider data network 120 or may involve resources communicated with service provider data network 120 via public communications networks such as Internet 160. Communications within service provider data network 120 may be provided using various types of transmission media including, but not limited to, coaxial lines, fiber optic lines, wireless connections, etc. Service provider data network 120 may use a single type of transmission media or a combination of transmission media types. For example, node device 130 of service provider data network 120 may transmit and receive data over Internet 160 via fiber optic lines and use coaxial lines for data transmissions with LANs 140A-140D. Service provider data network 120 may include additional node devices connected to different numbers and/or configurations of LANs. In addition, service provider data network 120 may include one or more head end systems (not shown) configured to distribute services to node devices, monitor performance of service provider data network 120, couple service provider data network 120 to resources outside of the network, such as Internet 160, or manage customer access and billing with respect to the services provided by service provider data network 120.

Node device 130 of service provider data network 120 represents a system configured to distribute communications to LANs operating at customers' premises within service provider data network 120. Node device 130 may include hardware and software components configured to translate communication protocols for communications received on one type of transmission media (e.g., fiber optic lines) and distributed on a second type of transmission media (e.g., coaxial lines), as well as make routing decisions for directing communications to their intended destinations.

As depicted in FIG. 1, LAN 140A includes gateway device 142, router 144, and set-top box (STB) 146. Briefly, gateway device 142 is configured to communicatively connect LAN 140A to service provider data network 120 and to facilitate communications between the two networks. Gateway device 142 may be implemented as a passive optical network (PON) modem, a Data Over Cable Service Interface Specifications (DOCSIS) cable modem, a PON optical line terminal (OLT) device, a DOCSIS remote physical-layer (-node) device (RPD), or a remote physical and MAC layers (node) device (RMD), etc. Router 144 is configured to route communications to their intended destinations within LAN 140A. Connections between router 144 and other elements of LAN 140A may be wired (e.g., Ethernet) and/or wireless (Wi-Fi using IEEE 802.11 standards). STB 146 represents an appliance configured to facilitate access to and consumption of services provided by service provider data network 120. For example, video content may be received, decoded, and provided for display on a display device such as television 148. While gateway device 142, router 144, and STB 146 are depicted as three distinct devices, some or all of the functionality provided by these devices may be combined into a single device such as a router-gateway device. Gateway device 142 and STB 146 are examples of edge devices/electronic devices as described herein with respect to the subject technology.

FIG. 1 illustrates a number of connected devices in communication with router 144. The connected devices include smartphone 150, thermostat 152, and camera 154. Smartphone 150 represents a connected user device through which a user may access and consume services provided by service provider data network 120. The services may include data/Internet access, video content, gaming, etc. The subject technology is not limited to smartphones and may involve other types of electronic user devices such as laptop computers and tablets. Thermostat 152 and camera 154 represent examples of connected Internet of Things (IoT) devices configured to collect and exchange data with other devices and systems to provide information and functionality to a user. IoT devices may use various sensors (e.g., temperature gauge, motion sensors, camera array, microphone, etc.) to capture data that may be processed using ML algorithms (e.g., neural network algorithms) to provide functionality to a user (e.g., image detection, voice recognition, efficient thermostat scheduling, etc.). The subject technology is not limited to these types of IoT devices and may involve other types of IoT devices such as smart appliances, weather centers, alarm systems, etc.

LANs 140B-140D may be implemented using the same or similar components as those described above with respect to LAN 140A. LANs 140B-140D may use the same number and type of components as LAN 140A or may use different numbers and/or types of components. As depicted in FIG. 1, LANs 140B-140D are represented by images of houses. The subject technology is not limited to residential users and may include LANs installed in multi-family developments, such as apartment complexes, as well as places of business. In addition, any of LANs 140A-140D may be implemented either as a physical network or as a virtualized network. A virtualized network may be based on a virtual LAN (VLAN) identified by a unique VLAN tag, where devices on the VLAN are connected logically on a physical LAN but may share physical resources of the physical LAN with one or more other VLANs while communications within the VLAN may be isolated from those of other VLANs.

Cloud controller 180 in FIG. 1 represents a server or group of servers configured to receive information from elements of service provider data network 120 and process the information for the operator of service provider data network 120. The information may include communications with the results of edge analytics generated by edge devices like gateway device 142 or STB 146. Cloud controller 180 may surface the information for the operator to view and make decisions. Cloud controller 180 also may be configured to initiate actions within service provider data network 120 to address issues/conditions indicated in the information.

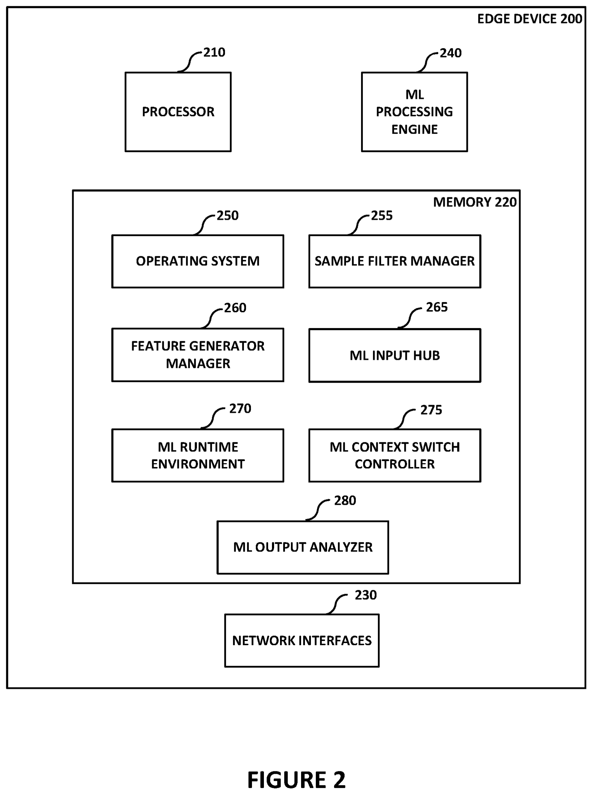

FIG. 2 is a block diagram illustrating components of an edge device according to aspects of the subject technology. Not all of the depicted components may be required, however, and one or more implementations may include additional components not shown in the figure. Variations in the arrangement and type of the components may be made without departing from the spirit or scope of the claims as set forth herein. Depicted or described connections and couplings between components (including electrical and communicative connections and couplings) are not limited to direct connections or direct couplings and may be implemented with one or more intervening components unless expressly stated otherwise.

As depicted in FIG. 2, edge device 200 includes processor 210, memory 220, network interfaces 230, and machine learning (ML) processing engine 240. According to aspects of the subject technology, processor 210, memory 220, network interfaces 230, and machine learning (ML) processing engine 240, or different sub-combinations of these components, may be implemented as an SoC on a single integrated circuit. Alternatively, one or more of these components may be implemented individually using circuitry such as Application Specific Integrated Circuits (ASIC), Field Programmable Gate Arrays (FPGA), Programmable Logic Devices (PLD), controllers, state machines, gated logic, discrete hardware components, or any other suitable devices.

Processor 210 (e.g., processing circuitry) may include suitable logic and circuitry to load and execute code to enable processing data and/or controlling operations of edge device 200. The functionality and operations of edge device 200 described herein may be implemented using software/firmware (e.g., instructions, code, subroutines, etc.) that is loaded and executed by processor 210 to provide the functionality and operations. In this regard, processor 210 may be configured to provide control signals to various other components of edge device 200. Processor 210 also may be configured to control the transfer of data between components within edge device 200 and between edge device 200 and other devices or systems outside of edge device 200.

According to aspects of the subject technology, memory 220 may include suitable logic, circuitry, and/or code that enable storage of various types of data and information such as received data, generated data, code, and/or configuration information. Memory 220 may include, for example, random access memory (RAM), read-only memory (ROM), flash memory, etc. Memory 220 may include multiple types of memory such as volatile memory and non-volatile memory. As depicted in FIG. 2, memory 220 contains operating system 250, sample filter manager 255, feature generator manager 260, ML input hub 265, ML runtime environment 270, ML context switch controller 275, and ML output analyzer 280, which are described further below.

According to aspects of the subject technology, network interfaces 230 may include suitable circuitry, logic, and/or code that enable the communication of data with edge device 200. Network interfaces 230 also may include structural elements to facilitate physical coupling of edge device 200 with transmission media to provide for the transmission and reception of electrical and/or optical signals encoded with data over the transmission media. Network interfaces 230 may include interfaces for each type of network and associated protocols in communication with edge device 200 such as an Ethernet and/or Wi-Fi (IEEE 802.11) interface for communications over a LAN on the customer's premises and a DOCSIS interface for communications over a broadband communications network.

According to aspects of the subject technology, ML processing engine 240 (e.g., neural processing unit) may include suitable logic, circuitry, and/or code that is configurable to execute ML models to perform inferences on sets of input data. ML processing engine 240 may operate as a hardware accelerator where the logic and circuitry of ML processing engine 240 may be configured as a framework for implementing different ML models using associated model parameter sets.

As depicted in FIG. 2, memory 220 contains a number of components for implementing the functionality of the subject technology described herein. According to aspects of the subject technology, operating system 250 comprises a computer program having one or more sequences of instructions or code together with associated data and settings. Upon executing the instructions or code, by processor 210 for example, one or more processes are initiated to manage the resources and operations of edge device 200 to implement the processes described herein.

According to aspects of the subject technology, sample filter manager 255 comprises one or more computer programs having one or more sequences of instructions or code together with associated data and settings. Upon executing the instructions or code, by processor 210 for example, one or more processes may be initialized to execute operations for extracting sample data from one or more data sources. In particular, sample filter manager 255 may initialize a sample filter for a data source, or aspect of a data source, operating at a functional layer of interest for purposes of edge analytics. Sample filter manager 255 may initialize and configure the sample filter according to a sample filter configuration maintained by sample filter manager 255. The sample filter configuration may specify the data source(s) to be sampled from and operating mode(s) or procedure(s) for sampling the data sources, for example. Operating modes may include a continuous sampling mode, a periodic sampling mode, or an on-demand sampling mode. The sample filtering may be based on time-series data, such as packet streams, or instantaneous snapshot data, such as memory dumps. With packet streams, for example, the filtered sample data may include inter-packet times, packet sizes, source/destination addresses/port numbers, number of sessions, etc. With memory dumps, for example, the filtered sample data may include memory map statistics based on a memory dump.

Sample filter manager 255 may use a pre-determined initial sample filter configuration when initializing one or more sample filters, and over time adaptively adjust the sample filter configuration to adapt the operation of the one or more sample filters based on feedback such as an operational or runtime status of the edge device. Sample filter manager 255 also may dynamically enable or disable specific sample filters based on the status of the edge device. For example, one or more sample filters may be disabled to minimize power consumption by the edge device or preserve processing resources available on the edge device. The subject technology is not limited to any particular number of sample filters and may execute multiple sample filters concurrently.

According to aspects of the subject technology, feature generator manager 260 comprises one or more computer programs having one or more sequences of instructions or code together with associated data and settings. Upon executing the instructions or code, by processor 210 for example, one or more processes may be initialized to execute operations for generating feature data from the sample data extracted using the sample filters. In particular, feature generator manager 260 may be configured to initialize a feature generator to process/format sample data extracted by a sample filter into corresponding feature data. Feature generator manager 260 may initialize and configure the feature generator according to a feature generator configuration managed by feature generator manager 260. The feature generator configuration may specify the sample data (e.g., memory location, data source, etc.) from which feature data is to be generated, processes or operations to be performed to generate the feature data, attributes of the sample data (e.g., weighted averaging, non-weighted averaging), and operating modes (e.g., period for statistics generation) of the feature generator, for example.

Feature data may represent properties or characteristics of the sample data determined using the processes or operations specified in the feature generator configuration. For the packet stream example noted above, the inter-packet time and packet size sample data may be processed to generate feature data comprising an average, minimum, maximum, and/or variance of the sample data. For the memory dump example noted above, the memory samples may be processed to generate feature data comprising hash values and/or other statistics of memory maps corresponding to the memory dumps. Feature generators may perform various operations or processes on the sample data when generating the feature data including, but not limited to, clamping, logging, scaling, one-hot mapping, etc. The feature generator configuration may specify a data structure to encapsulate the generated feature data such as header fields to uniquely identify the encapsulated feature data. For example, JavaScript Object Notation (JSON) may be used as a unified and secure data structure for the generated feature data.

Feature generator manager 260 may use pre-determined initial feature generator configuration when initializing one or more feature generators, and over time adaptively adjust the feature generator configuration to adapt the operation of the one or more feature generators based on feedback such as an operational or runtime status of the edge device, similar to sample filter manager 255 noted above. Feature generator manager 260 also may dynamically enable or disable specific feature generators based on the status of the edge device For example, one or more feature generators may be disabled to minimize power consumption by the edge device or preserve processing resources available on the edge device. The subject technology is not limited to any particular number of feature generators and may execute multiple feature generators concurrently. In addition, a feature generator may use sample data filtered by a single sample filter or sample data filtered by multiple sample filters when generating feature data.

Sample data may include sensitive data that triggers privacy or security concerns. In this regard, the generated feature data may be encrypted in the data structure to prevent unauthorized access to the feature data by other processes or electronic devices. Feature generator manager 260 may be configured to configure and manage credentials required for authentication and encryption/decryption of the generated feature data. The subject technology is not limited to any particular type of encryption or other security measures.

According to aspects of the subject technology, ML input hub 265 comprises one or more computer programs having one or more sequences of instructions or code together with associated data and settings. Upon executing the instructions or code, by processor 210 for example, one or more processes may be initialized to execute operations for collecting and processing input data for activated ML models. In particular, ML input hub 265 may be configured for aggregating feature data generated by one or more feature generators into input formats of corresponding ML models activated to process the feature data using ML operations such as inferences. Aggregation of the feature data may involve concatenation and/or mapping from multiple instances of feature data. In addition, aggregation of the feature data may include reshaping of the feature data structure such as increasing or decreasing the dimensionality of the feature data (e.g., changing the feature data structure from one dimension to two dimensions).

ML input hub 265 may use internal queues to aggregate and buffer the feature data generated by the feature generators. Queues may be associated with different priority levels and/or different functional layers. Feature data may be assigned to a queue having an associated priority level or functional layer that corresponds with that of the feature data. For example, different ML models may be used for different analytics having varying priority levels. Time-sensitive analytics or analytics for a status/state of the edge device that may have a significant impact on network security or user experience may have an assigned priority that is higher than priorities assigned to analytics that may generate more informational or clerical output data. Feature data may be generated and aggregated for a particular ML model and may be assigned to a queue having a priority level matching the priority level of the analytics for which the ML model is used.

ML input hub 265 also may be configured to remove the buffered feature data from the queues and prepare the feature data for input to the ML model the feature data is intended for. As discussed in more detail below, ML models may be scheduled for execution according to a context switch policy. The schedule for the ML models may be used to schedule removal of the feature data from the queues and preparation of the feature data for the intended ML model. For encrypted feature data, preparation of the feature data after removal from the queues may include authentication/decryption of the feature data prior to providing the feature data as input data to the intended ML model.

According to aspects of the subject technology, ML runtime environment 270 comprises one or more computer programs having one or more sequences of instructions or code together with associated data and settings. Upon executing the instructions or code, by processor 210 for example, one or more processes may be initialized to execute operations for invoking and executing ML models on ML processing engine 240. ML runtime environment 270 may operate in an on-demand mode where ML models are invoked and executed on-demand in response to data and/or event triggers within the edge device, for example. ML runtime environment 270 also may operate in a scheduled mode where ML models are invoked and executed according to a configured schedule. For example, the execution of an ML model may be synced with a periodic data sampling process the filters the sample data that is ultimately aggregated and provided as input data to the ML model.

ML models may be trained to perform different tasks in support of ML applications. For example, a first type of ML model may be used to detect the presence of any intrusion on an edge device, while a second type of ML model may be used to detect specific intrusions and/or intrusion categories. Different ML models may have different ML network architectures designed and trained for specific tasks. For example, an autoencoder-based ML model may be used as an anomaly detector to detect the presence of an intrusion, and a transformer-based ML model may be used to classify the specific intrusion. ML models may be defined with a set of parameters that identifies values used for variables in the underlying mathematical algorithm of the model (e.g., neural network model operations and parameters, etc.) and may specify types and formats for the input data. ML runtime environment 270 may include a library of parameter sets for various ML models. To invoke an ML model for execution, an ML model parameter set may be selected and used to configure ML processing engine 240 via an ML application programming interface (API) and driver.

ML runtime environment 270 may be configured to manage preemption events where an inference operation being executed using one ML model is preempted by another inference operation executed using another ML model. Preemption may be based on priorities of the ML models and/or data/event triggers. Preemption may be disabled within ML runtime environment 270 thereby allowing inference operations to run through completion. Alternatively, preemptions may be enabled and preempted inference operations may be either aborted or paused temporarily until conditions allow the inference operation to resume.

According to aspects of the subject technology, ML context switch controller 275 comprises one or more computer programs having one or more sequences of instructions or code together with associated data and settings. Upon executing the instructions or code, by processor 210 for example, one or more processes may be initialized to execute operations for activating and/or deactivating ML models in ML runtime environment 270 according to a context switch policy maintained by context switch controller 275. ML runtime environment 270 and ML processing engine 240 may support multiple active ML models being configured in ML processing engine 240. ML context switch controller 275 may switch among these active ML models according to the context switch policy. The context switch policy may specify round-robin, priority-based, or application-specific switching among ML models that are activated in ML runtime environment 270.

The context switch policy executed by ML context switch controller 275 may be adapted based on a status of the edge device and/or results of ML operations. For example, an ML model trained for intrusion-presence detection may be run initially. If the output of the ML model indicates that an intrusion is present in the system, ML context switch controller 275 may switch the context to run one or more ML models trained to detect specific intrusions. For example, three different ML models may be available for detecting three different types of intrusions. ML context switch controller 275 may schedule the three ML models to be executed in sequence by context switching from one ML model to the next after the one ML model has generated its output.

ML models may be trained to perform ML operations at particular functional layers. For example, an initial ML model may be trained for an Internet Protocol (IP) layer function. The output generated by the initial ML model may trigger running additional ML models that are trained for functions at progressively lower layers such as the media access control (MAC) layer and/or the physical layer. ML context switch controller 275 may schedule the additional ML models to be executed in sequence by context switching from one ML model to another. The flow or decision tree identifying which ML models to be activated under which circumstances may be specified in the context switch policy.

According to aspects of the subject technology, ML output analyzer 280 comprises one or more computer programs having one or more sequences of instructions or code together with associated data and settings. Upon executing the instructions or code, by processor 210 for example, one or more processes may be initialized to execute operations for analyzing and synthesizing the output data from active ML models to assess the overall system status of the edge device. In response to a particular ML model output triggering a switch to another ML model, ML output analyzer 280 may be configured to provide inputs to sample filter manager 255 and feature generator manager 260 to update the sample filter configuration and the feature generator configuration to dynamically configure the sample filters and feature generators for the new ML model. Similarly, ML output analyzer 280 may be configured to provide an input to ML context switch controller 275 to adaptively adjust the context switch policy to provide for a context switch to the new ML model. For example, initial configurations may be for performing intrusion-presence detection with corresponding sample filters and feature generators. If the ML model output indicates the presence of an intrusion, ML output analyzer 280 provides inputs to ML context switch controller 275 to activate one or more ML models for specific intrusions and inputs to sample filter manager 255 and feature generator manager 260 to initiate sample filters and feature generators corresponding to the one or more ML models being activated.

ML output analyzer 280 is configured to evaluate the output data generated by active ML models to determine a system status. The evaluation of the output data may be task-specific. For example, when evaluating the output data generated by the ML model for intrusion detection, ML output analyzer may analyze the output data to determine, for example, a confidence level of detection, a severity of the detected intrusions, and/or the generality of the detection results. Based on the evaluations of the output data, ML output analyzer 280 may initiate further actions associated with the overall task (i.e., intrusion detection). For example, ML output analyzer 280 may activate additional ML models for follow-up or downstream tasks and change the configuration of sample filters and feature generators according to the newly activated ML models. ML output analyzer 280 also may schedule the execution of multiple ML models via context switching and/or generate one or more events indicating a status of the system based on the output data of the active ML models. ML output analyzer 280 may generate and transmit messages including the events and/or status of the edge device to another electronic device such as the cloud controller in FIG. 1.

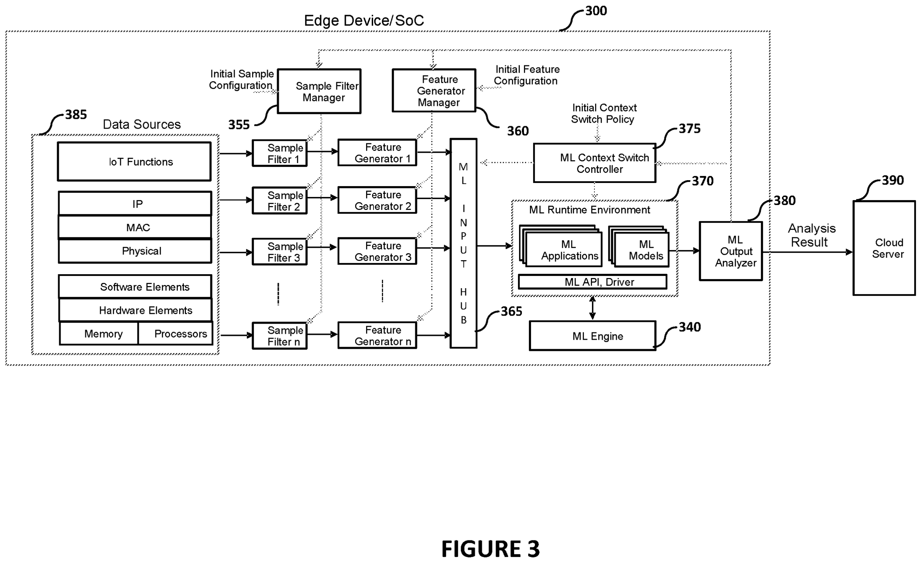

FIG. 3 is a block diagram illustrating system components of an edge device according to aspects of the subject technology. Not all of the depicted components may be required, however, and one or more implementations may include additional components not shown in the figure. Variations in the arrangement and type of the components may be made without departing from the spirit or scope of the claims as set forth herein. Depicted or described connections and couplings between components (including electrical and communicative connections and couplings) are not limited to direct connections or direct couplings and may be implemented with one or more intervening components unless expressly stated otherwise.

As depicted in FIG. 3, edge device 300 includes many components corresponding to the components described above with respect to FIG. 2 such as ML processing engine 340, sample filter manager 355, feature generate manager 360, ML input hub 365, ML runtime environment 370, ML context switch controller 375, and ML output analyzer 380. The general operations of these components are described above in connection with the corresponding components in FIG. 2 and will not be repeated here. FIG. 3 is provided to illustrate communications between the components.

FIG. 3 illustrates sample filter manager 355 in communication with sample filters 1, 2, 3 . . . n. As described above, the sample filters are configured to filter sample data from data sources such as data sources 385. Data sources 385 includes sources operating at different functional levels. For example, data sources 385 include sources operating at Internet of Things (IoT) layers (e.g., IoT functions). The sample data from the IoT functions includes data collected for or from IoT devices external to edge device 300. The data may include video/image data captured by a camera, audio data captured by an audio device, motion data captured by motion sensor, for example. The subject technology is not limited to these examples and may include other IoT devices, functions, and data.

Data sources 385 also include networking functional layers comprising protocol stack layers for communications that occur within or cross edge device 300. The examples illustrated in FIG. 3 include an IP layer, a media access control (MAC) layer, and a physical layer. For a DOCSIS broadband network, the IP layer represents TCP/UDP/IP protocols and the MAC layer represents DOCSIS MAC protocols. Also included are platform functional layers comprising computational resources such as memory and processors, hardware elements including hardware interfaces (e.g., Wi-Fi) and modules (e.g., receivers/transmitters), and software elements including operating systems, middleware, and application software. The functional layers at which the data sources operate may be further divided into functional sub-layers. For example, the IP functional layer may be divided into packet/connection/app sub-layers. Similarly, a hardware interface functional layer may be further divided into LAN/WAN/memory/ I-O sub-layers.

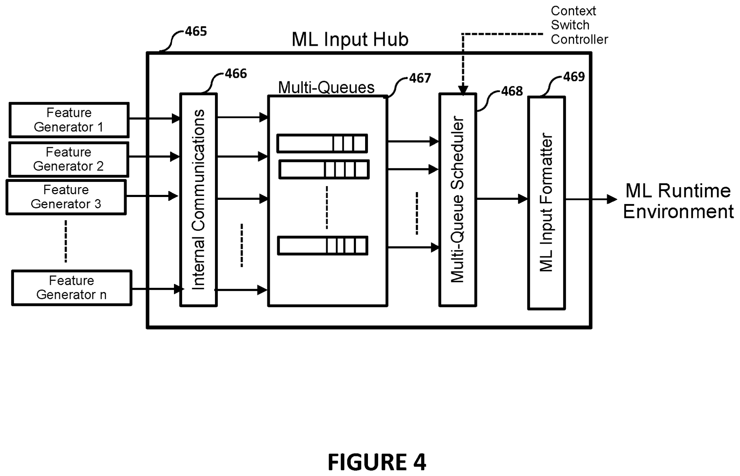

Feature generator manager 360 is illustrated in communication with feature generators 1, 2, 3, ... n. As noted above, the feature generators generate feature data from sample data filtered by the sample filters. The feature data is aggregated in queues in ML input hub 365. FIG. 4 is a block diagram illustrating components of an ML input hub according to aspects of the subject technology. Not all of the depicted components may be required, however, and one or more implementations may include additional components not shown in the figure. Variations in the arrangement and type of the components may be made without departing from the spirit or scope of the claims as set forth herein. Depicted or described connections and couplings between components (including electrical and communicative connections and couplings) are not limited to direct connections or direct couplings and may be implemented with one or more intervening components unless expressly stated otherwise.

As depicted in FIG. 4, ML input hub 465 includes internal communications 466, multi-queues 467, multi-queue scheduler 468, and ML input formatter 469. The general operation of an ML input hub is described above with respect to FIG. 2 and will not be repeated here. Internal communications 466 represents on-device message passing mechanisms specific to individual functional layers/sub-layers and the corresponding feature generator from feature generators 1, 2, 3, ... n. Multi-queues 467 aggregates the feature data generated by the feature generators into multiple queues. Multi-queue scheduler 468 is configured to remove feature data from the queues and provide it to ML input formatter 469 according to a schedule generated based on input from the context switch controller. ML input formatter 469 generates input data for an ML model from the feature data removed from the queues by multi-queue scheduler 468, and provides the input data to the ML runtime environment.

Returning to FIG. 3, ML runtime environment 370 receives input data from ML input hub 365 for an ML model. ML applications may be configured to invoke and execute the ML model on ML processing engine 340 via an ML API and driver. Output data generated by the ML runtime environment may be provided to ML output analyzer 380 for analysis and evaluation. Based on the results of the evaluation, ML output analyzer 380 may generate and transmit a message including an indication of the analysis result to cloud server 390. In addition, ML output analyzer 380 may send update information to sample filter manager 355, feature generator manager 360, and ML context switch controller 375 to update/adapt the sample filter configuration, the feature generator configuration, and/or the context switch policy.

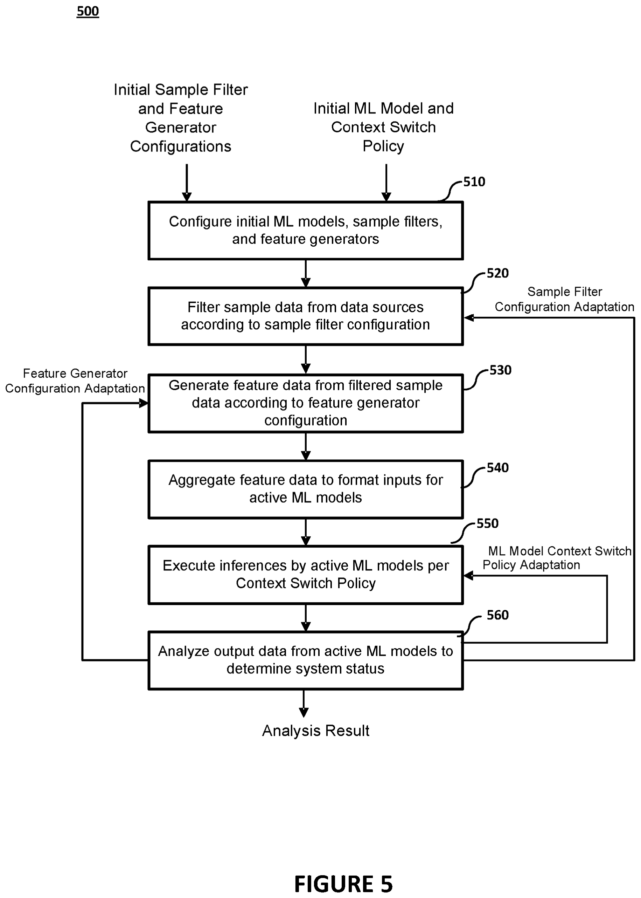

FIG. 5 is a flowchart illustrating an example process of machine learning analytics for edge devices according to aspects of the subject technology. For explanatory purposes, the blocks of the illustrated process may be described herein as occurring in serial or linearly. However, two or more blocks of the illustrated process may be performed in parallel. In addition, the blocks depicted in FIG. 5 may be performed in a different order from that shown and the process may not perform one or more of the illustrated blocks and/or may include one or more additional blocks.

As depicted in FIG. 5, process 500 includes the initial configuration of active ML models, sample filters, and feature generators using an initial Context Switch Policy that indicates an initial ML model(s) and initial Sample Filter and Feature Generator Configurations associated with the initial ML model (block 510). The sample filters are used to filter sample data from data sources according to the sample filter configuration (block 520) and the feature generators generate feature data from the filtered sample data according to the feature generator configuration (block 530). The feature data is aggregated to format inputs for the active ML models (block 540) and inferences are executed by the active ML models per the Context Switch Policy (block 550). The output data from the active ML models is analyzed to determine system status (block 560). In addition to outputting the analysis result, adaptations for the ML model and Context Switch Policy, for the feature generation configuration, and for the sample filter configuration are determined based on system status and used to modify the ML model, the Context Switch Policy, the Sample Filters, and the Feature Generators for subsequent iterations of process 500.

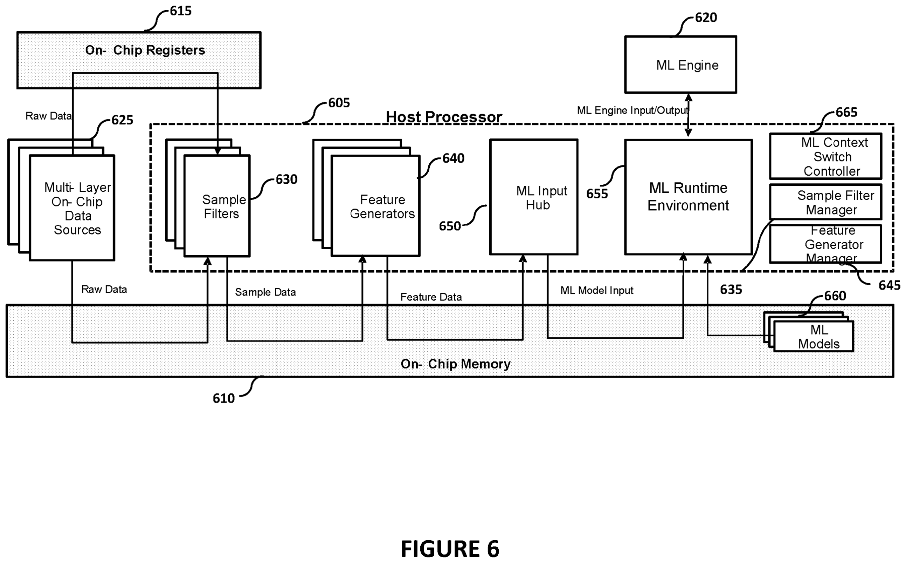

FIG. 6 is a block diagram illustrating an example workflow with respect to components of an edge device according to aspects of the subject technology. Not all of the depicted components may be required, however, and one or more implementations may include additional components not shown in the figure. Variations in the arrangement and type of the components may be made without departing from the spirit or scope of the claims as set forth herein. Depicted or described connections and couplings between components (including electrical and communicative connections and couplings) are not limited to direct connections or direct couplings and may be implemented with one or more intervening components unless expressly stated otherwise.

Host processor 605, on-chip memory 610, on-chip registers 615, and ML engine 620 depicted in FIG. 6, represent components of an edge device SoC according to aspects of the subject technology. On-chip data sources operating at respective functional layers generate raw data during normal operation. This raw data may be stored by the data sources in on-chip memory 610 and/or on-chip registers 615. Sample filters 630 managed by sample filter manager 635 access the raw data in on-chip registers 615 and/or on-chip memory 610 to filter sample data according to a sample filter configuration. The filtered sample data may be temporarily stored in on-chip memory 610. Feature generators 640 under the management of feature generator manager 645 accesses the sample data in on-chip memory 610 and generates feature data in accordance with a feature generation configuration. The feature data may be temporarily stored in on-chip memory 610 until aggregated into input formats for one or more ML models in queues managed by ML input hub 650.

Based on a context switch policy managed by ML context switch controller 665, the aggregated feature data the aggregated feature data may be provided as input data for ML models 660 that have been loaded into ML engine 620 and configured according to the context switch policy. ML engine 620 may execute an inference operation using the loaded and configured ML model and output data results for analysis.

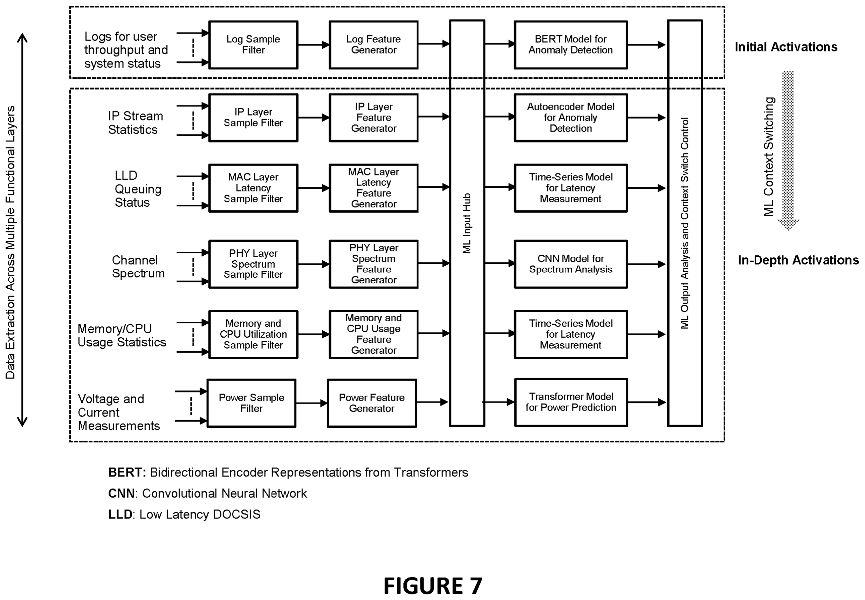

FIG. 7 is a block diagram illustrating aspects of multi-layer edge diagnostic operations that may be executed in a cable modem according to aspects of the subject technology. The initial activations according to a Context Switching Policy may include a sample filter and feature generator configured to filter logs of user throughput and system status data, for example, and generate feature data from filtered sample data. The generated feature data may be aggregated into input data for a Bidirectional Encoder Representations from Transformers (BERT) model to detect any anomalies that may impact user experience. Such anomalies may be detected in upstream/downstream channel throughputs, application latencies, time outs, or other system metrics.

Upon detecting an anomaly, the ML context switch controller may activate additional ML models, sample filters, and feature generators across multiple functional layers. Examples of the multiple functional layers may include IP stream statistics to be analyzed for intrusion detections (e.g., Denial of Service (DoS), BruteForce attacks, BotNet), MAC layer transmission queues related to low-latency control (e.g., Low Latency DOCSIS (LLD) queue and a classic queue), PHY layer spectrum analysis for impairment detection on communications channels (e.g., standing wave, rolloff, tilt, etc.), memory/CPU usage statistics for detecting abnormal usage patterns, voltage and current measurements for power consumptions and thermal prediction of the edge device. A variety of ML models may be used for ML operation on the filtered sample data. For example, autoencoder models may be used for anomaly detection, time-series models may be used for latency measurements, and convolutional neural network models for spectrum analysis.

As described herein, the subject technology provides a dynamic and adaptive analytics system for edge devices on a network. The systematic data sampling and feature data generation across multiple functional layers within an edge device provides a diverse array of information for analyzing the performance and operation of the edge device using ML models. The subject technology utilizes a context switching process to dynamically configure and queue the ML models for execution. The context switching policy, as well as the data sampling and feature generation, adapt to events or changes in the status of the edge device indicated by outputs of the ML models. Accordingly, the system is able to dynamically adapt the level of analytics being executed for current conditions experienced by the edge device and thereby utilize the resources of the edge device in an efficient and effective manner.

According to aspects of the subject technology, an electronic device is provided that includes: computer-readable storage media storing one or more sequences of instructions; and processing circuitry configured to execute the one or more sequences of instructions to perform operations comprising: filtering sample data on the electronic device from a plurality of data sources in accordance with a sample filter configuration, wherein the plurality of data sources operate at respective functional layers; generating feature data from the sample data in accordance with a feature generator configuration; aggregating the generated feature data into input formats corresponding to one or more machine learning models activated according to a context switch policy, wherein the feature data is aggregated in a plurality of queues; executing inference operations by providing at least a portion of the feature data from the plurality of queues as input data to the one or more machine learning models to generate output data; determining a status of the electronic device based on the generated output data; and adapting the sample filter configuration, the feature generator configuration, or the context switch policy based on the determined status of the electronic device to modify subsequent iterations of the filtering, generating, aggregating, or executing operations performed by the processing circuitry.

The operations may further comprise operations further comprise generating and transmitting a message comprising the determined status of the electronic device to another electronic device via a network. The sample filter configuration may specify a sampling mode from a set of sampling modes comprising a continuous sampling mode, a periodic sampling mode, and an on-demand sampling mode. The generated feature data may be encapsulated in a unified data structure. The plurality of queues may be assigned respective priorities and the aggregated feature data may be assigned to the plurality of queues based on priorities of the aggregated feature data. The context switch policy may specify machine learning models from the plurality of machine learning models for activating using a round-robin policy, a priority-based policy, and an application-specific policy. The context switch policy may be adapted to activate one or more additional machine learning models from the plurality of machine learning models based on the determined status of the electronic device, and wherein the sample filter configuration and the feature generator configuration may be adapted to specify filtering of sample data and generating of feature data corresponding to the one or more additional machine learning models. The context switch policy may be adapted to schedule activating multiple machine learning models from the plurality of machine learning models and executing multiple inference operations using the multiple machine learning models. The feature data may be encrypted in the plurality of queues and decrypted prior to providing the feature data as input data to the one or more machine learning models.

According to aspects of the subject technology, a method is provided that includes: filtering sample data on an electronic device from a plurality of data sources in accordance with a sample filter configuration, wherein the plurality of data sources operate at respective functional layers; generating feature data from the sample data in accordance with a feature generator configuration; aggregating the generated feature data into input formats corresponding to one or more machine learning models activated according to a context switch policy, wherein the feature data is aggregated in a plurality of queues based on priorities associated with the feature data; executing inference operations by providing at least a portion of the feature data from the plurality of queues as input data to the one or more machine learning models to generate output data; determining a status of the electronic device based on the generated output data and transmitting the status to another electronic device via a network; and adapting the sample filter configuration, the feature generator configuration, or the context switch policy based on the determined status of the electronic device to modify subsequent iterations of the filtering, generating, aggregating, or executing operations performed by the processing circuitry.

The sample filter configuration may specify a sampling mode from a set of sampling modes comprising a continuous sampling mode, a periodic sampling mode, or an on-demand sampling mode. The context switch policy may specify machine learning models from the plurality of machine learning models for activating using a round-robin policy, a priority-based policy, or an application-specific policy. The context switch policy may be adapted to activate one or more additional machine learning models from the plurality of machine learning models based on the determined status of the electronic device, and wherein the sample filter configuration and the feature generator configuration may be adapted to specify filtering of sample data and generating of feature data corresponding to the one or more additional machine learning models. The context switch policy is adapted to schedule invoking multiple machine learning models from the plurality of machine learning models and executing multiple inference operations using the multiple machine learning models. The feature data may be encrypted in the plurality of queues and decrypted prior to providing the feature data an input data to the one or more machine learning models.

According to aspects of the subject technology, a system-on-a-chip electronic device is provided that includes: a machine learning processing engine configurable to execute a plurality of machine learning models; computer-readable storage media storing one or more sequences of instructions; and processing circuitry configured to execute the one or more sequences of instructions to perform operations comprising: filtering sample data on the electronic device from a plurality of data sources in accordance with a sample filter configuration, wherein the plurality of data sources operate at respective functional layers; generating feature data from the sample data in accordance with a feature generator configuration; aggregating the generated feature data into input formats corresponding to one or more machine learning models of the plurality of machine learning models configured in the machine learning processing engine according to a context switch policy, wherein the feature data is aggregated in a plurality of queues; executing inference operations by providing at least a portion of the feature data from the plurality of queues as input data to the one or more machine learning models to generate output data; determining a status of the electronic device based on the generated output data; and adapting the sample filter configuration, the feature generator configuration, or the context switch policy based on the determined status of the electronic device to modify subsequent iterations of the filtering, generating, aggregating, or executing operations performed by the processing circuitry, wherein the context switch policy is adapted to activate one or more additional machine learning models from the plurality of machine learning models based on the determined status of the electronic device, and wherein the sample filter configuration and the feature generator configuration are adapted to specify filtering of sample data and generating of feature data corresponding to the one or more additional machine learning models.

The operations may further comprise transmitting the determined status of the electronic device to another electronic device via a network. The sample filter configuration may specify a sampling mode from a set of sampling modes comprising a continuous sampling mode, a periodic sampling mode, and an on-demand sampling mode. The plurality of queues may be assigned respective priorities and the aggregated feature data may be assigned to the plurality of queues based on priorities of the aggregated feature data. The context switch policy specifies machine learning models from the plurality of machine learning models for activating using a round-robin policy, a priority-based policy, and an application-specific policy.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In some implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language of the claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

The predicate words "configured to", "operable to", and "programmed to" do not imply any particular tangible or intangible modification of a subject, but, rather, are intended to be used interchangeably. For example, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

A phrase such as an "aspect" does not imply that such aspect is essential to the subject technology or that such aspect applies to all configurations of the subject technology. A disclosure relating to an aspect may apply to all configurations, or one or more configurations. A phrase such as an aspect may refer to one or more aspects and vice versa. A phrase such as a "configuration" does not imply that such configuration is essential to the subject technology or that such configuration applies to all configurations of the subject technology. A disclosure relating to a configuration may apply to all configurations, or one or more configurations. A phrase such as a configuration may refer to one or more configurations and vice versa.

The word "example" is used herein to mean "serving as an example or illustration." Any aspect or design described herein as "example" is not necessarily to be construed as preferred or advantageous over other aspects or designs.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112(f) unless the element is expressly recited using the phrase "means for" or, in the case of a method claim, the element is recited using the phrase "step for." Furthermore, to the extent that the term "include," "have," or the like is used in the description or the claims, such term is intended to be inclusive in a manner similar to the term "comprise" as "comprise" is interpreted when employed as a transitional word in a claim.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way), all without departing from the scope of the subject technology.

The predicate words "configured to," "operable to," and "programmed to" do not imply any particular tangible or intangible modification of a subject but, rather, are intended to be used interchangeably. For example, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

The following are further embodiments of the present invention:
1. An electronic device, comprising:
   computer-readable storage media storing one or more sequences of instructions; and
   processing circuitry configured to execute the one or more sequences of instructions to perform operations comprising:
      filtering sample data on the electronic device from a plurality of data sources in accordance with a sample filter configuration, wherein the plurality of data sources operate at respective functional layers;
      generating feature data from the sample data in accordance with a feature generator configuration; aggregating the generated feature data into input formats corresponding to one or more machine learning models activated according to a context switch policy, wherein the feature data is aggregated in a plurality of queues;
      executing inference operations by providing at least a portion of the feature data from the plurality of queues as input data to the one or more machine learning models to generate output data;
      determining a status of the electronic device based on the generated output data; and
      adapting the sample filter configuration, the feature generator configuration, or the context switch policy based on the determined status of the electronic device to modify subsequent iterations of the filtering, generating, aggregating, or executing operations performed by the processing circuitry.
2. The electronic device of embodiment 1, wherein the operations further comprise generating and transmitting a message comprising the determined status of the electronic device to another electronic device via a network.
3. The electronic device of embodiment 1, wherein the sample filter configuration specifies a sampling mode from a set of sampling modes comprising a continuous sampling mode, a periodic sampling mode, and an on-demand sampling mode.
4. The electronic device of embodiment 1, wherein the generated feature data is encapsulated in a unified data structure.
5. The electronic device of embodiment 1, wherein the plurality of queues are assigned respective priorities and the aggregated feature data is assigned to the plurality of queues based on priorities of the aggregated feature data.
6. The electronic device of embodiment 1, wherein the context switch policy specifies machine learning models from the plurality of machine learning models for activating using a round-robin policy, a priority-based policy, and an application-specific policy.
7. The electronic device of embodiment 1, wherein the context switch policy is adapted to activate one or more additional machine learning models from the plurality of machine learning models based on the determined status of the electronic device, and wherein the sample filter configuration and the feature generator configuration are adapted to specify filtering of sample data and generating of feature data corresponding to the one or more activated machine learning models.
8. The electronic device of embodiment 1, wherein the context switch policy is adapted to schedule activating multiple machine learning models from the plurality of machine learning models and executing multiple inference operations using the multiple machine learning models.
9. The electronic device of embodiment 1, wherein the feature data is encrypted in the plurality of queues and is decrypted prior to providing the feature data as input data to the one or more machine learning models.
10. A method, comprising:
   filtering sample data on an electronic device from a plurality of data sources in accordance with a sample filter configuration, wherein the plurality of data sources operate at respective functional layers;
   generating feature data from the sample data in accordance with a feature generator configuration;
   aggregating the generated feature data into input formats corresponding to one or more machine learning models activated according to a context switch policy, wherein the feature data is aggregated in a plurality of queues based on priorities associated with the feature data;
   executing inference operations by providing at least a portion of the feature data from the plurality of queues as input data to the one or more machine learning models to generate output data;
   determining a status of the electronic device based on the generated output data and transmitting the status to another electronic device via a network; and
   adapting the sample filter configuration, the feature generator configuration, or the context switch policy based on the determined status of the electronic device to modify subsequent iterations of the filtering, generating, aggregating, or executing operations performed by the processing circuitry.
11. The method of embodiment 10, wherein the sample filter configuration specifies a sampling mode from a set of sampling modes comprising a continuous sampling mode, a periodic sampling mode, or an on-demand sampling mode.
12. The method of embodiment 10, wherein the context switch policy specifies machine learning models from the plurality of machine learning models for activating using a round-robin policy, a priority-based policy, or an application-specific policy.
13. The method of embodiment 10, wherein the context switch policy is adapted to activate one or more additional machine learning models from the plurality of machine learning models based on the determined status of the electronic device, and wherein the sample filter configuration and the feature generator configuration are adapted to specify filtering of sample data and generating of feature data corresponding to the one or more additional machine learning models.
14. The method of embodiment 10, wherein the context switch policy is adapted to schedule invoking multiple machine learning models from the plurality of machine learning models and executing multiple inference operations using the multiple machine learning models.
15. The method of embodiment 10, wherein the feature data is encrypted in the plurality of queues and is decrypted prior to providing the feature data an input data to the one or more machine learning models.
16. A system-on-a-chip electronic device, comprising:
   a machine learning processing engine configurable to execute a plurality of machine learning models;
   computer-readable storage media storing one or more sequences of instructions; and
   processing circuitry configured to execute the one or more sequences of instructions to perform operations comprising:
      filtering sample data on the electronic device from a plurality of data sources in accordance with a sample filter configuration, wherein the plurality of data sources operate at respective functional layers;
      generating feature data from the sample data in accordance with a feature generator configuration;
      aggregating the generated feature data into input formats corresponding to one or more machine learning models of the plurality of machine learning models configured in the machine learning processing engine according to a context switch policy, wherein the feature data is aggregated in a plurality of queues;
      executing inference operations by providing at least a portion of the feature data from the plurality of queues as input data to the one or more machine learning models to generate output data;
      determining a status of the electronic device based on the generated output data; and
      adapting the sample filter configuration, the feature generator configuration, or the context switch policy based on the determined status of the electronic device to modify subsequent iterations of the filtering, generating, aggregating, or executing operations performed by the processing circuitry,
      wherein the context switch policy is adapted to activate one or more machine learning models from the plurality of machine learning models based on the determined status of the electronic device, and wherein the sample filter configuration and the feature generator configuration are adapted to specify filtering of sample data and generating of feature data corresponding to the one or more additional machine learning models.
17. The system-on-a-chip electronic device of embodiment 16, wherein the operations further comprise transmitting the determined status of the electronic device to another electronic device via a network.
18. The system-on-a-chip electronic device of embodiment 16, wherein the sample filter configuration specifies a sampling mode from a set of sampling modes comprising a continuous sampling mode, a periodic sampling mode, and an on-demand sampling mode.
19. The system-on-a-chip electronic device of embodiment 16, wherein the plurality of queues are assigned respective priorities and the aggregated feature data is assigned to the plurality of queues based on priorities of the aggregated feature data.
20. The system-on-a-chip electronic device of embodiment 16, wherein the context switch policy specifies machine learning models from the plurality of machine learning models for activating using a round-robin policy, a priority-based policy, and an application-specific policy.

## Claims

1. An electronic device, comprising:
computer-readable storage media storing one or more sequences of instructions; and
processing circuitry configured to execute the one or more sequences of instructions to perform operations comprising:
filtering sample data on the electronic device from a plurality of data sources in accordance with a sample filter configuration, wherein the plurality of data sources operate at respective functional layers;
generating feature data from the sample data in accordance with a feature generator configuration;
aggregating the generated feature data into input formats corresponding to one or more machine learning models activated according to a context switch policy, wherein the feature data is aggregated in a plurality of queues;
executing inference operations by providing at least a portion of the feature data from the plurality of queues as input data to the one or more machine learning models to generate output data;
determining a status of the electronic device based on the generated output data; and
adapting the sample filter configuration, the feature generator configuration, or the context switch policy based on the determined status of the electronic device to modify subsequent iterations of the filtering, generating, aggregating, or executing operations performed by the processing circuitry.

2. The electronic device of claim 1, wherein the operations further comprise generating and transmitting a message comprising the determined status of the electronic device to another electronic device via a network.

3. The electronic device of claims 1 or 2, wherein the sample filter configuration specifies a sampling mode from a set of sampling modes comprising a continuous sampling mode, a periodic sampling mode, and an on-demand sampling mode
and/or
wherein the generated feature data is encapsulated in a unified data structure.

4. The electronic device of one of the previous claims, wherein the plurality of queues are assigned respective priorities and the aggregated feature data is assigned to the plurality of queues based on priorities of the aggregated feature data
and/or
wherein the context switch policy specifies machine learning models from the plurality of machine learning models for activating using a round-robin policy, a priority-based policy, and an application-specific policy.

5. The electronic device of one of the previous claims, wherein the context switch policy is adapted to activate one or more additional machine learning models from the plurality of machine learning models based on the determined status of the electronic device, and wherein the sample filter configuration and the feature generator configuration are adapted to specify filtering of sample data and generating of feature data corresponding to the one or more activated machine learning models.

6. The electronic device of one of the previous claims, wherein the context switch policy is adapted to schedule activating multiple machine learning models from the plurality of machine learning models and executing multiple inference operations using the multiple machine learning models
and/or
wherein the feature data is encrypted in the plurality of queues and is decrypted prior to providing the feature data as input data to the one or more machine learning models.

7. A method, comprising:
filtering sample data on an electronic device from a plurality of data sources in accordance with a sample filter configuration, wherein the plurality of data sources operate at respective functional layers;
generating feature data from the sample data in accordance with a feature generator configuration;
aggregating the generated feature data into input formats corresponding to one or more machine learning models activated according to a context switch policy, wherein the feature data is aggregated in a plurality of queues based on priorities associated with the feature data;
executing inference operations by providing at least a portion of the feature data from the plurality of queues as input data to the one or more machine learning models to generate output data;
determining a status of the electronic device based on the generated output data and transmitting the status to another electronic device via a network; and
adapting the sample filter configuration, the feature generator configuration, or the context switch policy based on the determined status of the electronic device to modify subsequent iterations of the filtering, generating, aggregating, or executing operations performed by the processing circuitry.

8. The method of claim 7, wherein the sample filter configuration specifies a sampling mode from a set of sampling modes comprising a continuous sampling mode, a periodic sampling mode, or an on-demand sampling mode
and/or
wherein the context switch policy specifies machine learning models from the plurality of machine learning models for activating using a round-robin policy, a priority-based policy, or an application-specific policy.

9. The method of claims 7 or 8, wherein the context switch policy is adapted to activate one or more additional machine learning models from the plurality of machine learning models based on the determined status of the electronic device, and wherein the sample filter configuration and the feature generator configuration are adapted to specify filtering of sample data and generating of feature data corresponding to the one or more additional machine learning models.

10. The method of one of claims 7 to 9, wherein the context switch policy is adapted to schedule invoking multiple machine learning models from the plurality of machine learning models and executing multiple inference operations using the multiple machine learning models
and/or
wherein the feature data is encrypted in the plurality of queues and is decrypted prior to providing the feature data an input data to the one or more machine learning models.

11. A system-on-a-chip electronic device, comprising:
a machine learning processing engine configurable to execute a plurality of machine learning models;
computer-readable storage media storing one or more sequences of instructions; and
processing circuitry configured to execute the one or more sequences of instructions to perform operations comprising:
filtering sample data on the electronic device from a plurality of data sources in accordance with a sample filter configuration, wherein the plurality of data sources operate at respective functional layers;
generating feature data from the sample data in accordance with a feature generator configuration;
aggregating the generated feature data into input formats corresponding to one or more machine learning models of the plurality of machine learning models configured in the machine learning processing engine according to a context switch policy, wherein the feature data is aggregated in a plurality of queues;
executing inference operations by providing at least a portion of the feature data from the plurality of queues as input data to the one or more machine learning models to generate output data;
determining a status of the electronic device based on the generated output data; and
adapting the sample filter configuration, the feature generator configuration, or the context switch policy based on the determined status of the electronic device to modify subsequent iterations of the filtering, generating, aggregating, or executing operations performed by the processing circuitry,
wherein the context switch policy is adapted to activate one or more machine learning models from the plurality of machine learning models based on the determined status of the electronic device, and wherein the sample filter configuration and the feature generator configuration are adapted to specify filtering of sample data and generating of feature data corresponding to the one or more additional machine learning models.

12. The system-on-a-chip electronic device of claim 11, wherein the operations further comprise transmitting the determined status of the electronic device to another electronic device via a network.

13. The system-on-a-chip electronic device of claims 11 or 12, wherein the sample filter configuration specifies a sampling mode from a set of sampling modes comprising a continuous sampling mode, a periodic sampling mode, and an on-demand sampling mode.

14. The system-on-a-chip electronic device of one of claims 11 to 13, wherein the plurality of queues are assigned respective priorities and the aggregated feature data is assigned to the plurality of queues based on priorities of the aggregated feature data.

15. The system-on-a-chip electronic device of one of claims 11 to 14, wherein the context switch policy specifies machine learning models from the plurality of machine learning models for activating using a round-robin policy, a priority-based policy, and an application-specific policy.
